Europäisches Patentamt

European Patent Office

Office européen des brevets

(19)

(11) Publication number: **0 108 541**

**A2**

(12) # EUROPEAN PATENT APPLICATION

(21) Application number: **83306432.2**

(22) Date of filing: **24.10.83**

(51) Int. Cl.³: **H 04 N 3/30**

(30) Priority: **03.11.82 GB 8231424**

(43) Date of publication of application:
**16.05.84 Bulletin 84/20**

(84) Designated Contracting States:
**AT BE CH DE FR GB IT LI LU NL SE**

(71) Applicant: THORN EMI Ferguson Limited
Thorn Emi House Upper Saint Martin's Lane
London, WC2H 9ED(GB)

(72) Inventor: Jones, Sidney Charles
76, Mansfield Avenue Cockfosters
East Barnet Hertfordshire, EN4 8QF(GB)

(72) Inventor: Hastings, Joseph Francis Conway
2, Cillocks Close
Hoddesdon Hertfordshire(GB)

(74) Representative: Fleming, Ian Alexander et al,
THORN EMI Patents Limited The Quadrangle
Westmount Centre Uxbridge Road
Hayes Middlesex, UB4 0HB(GB)

(54) Television receiver.

(57) Television receiver 1 has a digital store 5 for video information received from any of aerial 2, cable operator station 3 or video storage 4. Receiver 1 also has a processor 6 which controls the clocking out of the video information from store 5 and provides a substantially sinusoidal scan current waveform; processor 6 displays alternate lines forwards and backwards.

FIG.1

Croydon Printing Company Ltd

: 1 :

## TELEVISION RECEIVER

The present invention relates to a television receiver.

When magnetically scanning across the cathode ray tube of a television screen, the angle of deflection is generally proportional to the deflection current, thereby resulting in a sawtooth waveform (bearing in mind the required flyback motion). However, as the screen is not hemispherical but approximates to a flat or shallow radius surface, a correction component is added to the deflection current to ensure a substantially linear scan across the screen; the resultant current waveform is curved with a maximum gradient at the centre of the screen and a minimum gradient at the edge, this being known as an 'S' corrected current waveform.

The present invention provides a television receiver characterised by means to provide a substantially sinusoidal scan current for the display of the horizontal lines of video information.

Thus, whereas it was previously known to generate a suitably corrected sawtooth scanning current, a receiver of the present invention can simply utilize a sinusoidal waveform generator, thereby providing substantially the same performance but with simpler and cheaper equipment. Moreover, use of a sinusoidal scanning current can obviate any flyback motion, thereby extending the time of displaying the video information in each line and economising on the energy expenditure by excluding reverse hysteresis losses in the ferrite core. Also, use of a sinusoidal scanning current can provide an increase in the available bandwidth, in that there is more time to display a line of information.

Preferably the receiver also has means to store the horizontal lines of video information and processing means to arrange each line of video information in a format suitable for sinusoidal scanning.

Preferably the television receiver has means to store the horizontal lines of video information and processing means to phase modulate each line of information to achieve suitable linear horizontal scanning during display. Thus linear scanning may still be achieved even in circumstances (e.g. a substantially flat scan) when the configuration of the tube screen is such that a suitably corrected waveform does not approximate to a sinusoidal waveform.

Preferably the television receiver has means to store the horizontal lines of video information and means to control the display of the lines of video information, whereby in use the information display of one line is scanned in a forward direction corresponding to the sequence transmitted to the receiver, and the information display of the immediately succeeding line is scanned in the reverse direction. This arrangement of scanning is preferably repeated throughout the height of the screen. Again, this feature obviates the flyback motion with the consequent advantages as described above.

The storage means is preferably a digital store; alternatively it can be a charge coupled memory. Also, the lines can be processed by the processing means after leaving the storage means, otherwise they are processed before entering the storage means.

In any form of the present invention, the lines of video information can be processed to alter their format and thereby

0108541

change the time length of display of a line.

For example, upon receipt at the television receiver the lines of video information are in a format providing for a display period of 52 $\mu$ secs (i.e. that corresponding to the existing U.K. system), but after processing each of the lines are actually displayed on the screen over a time interval of 32 $\mu$ secs. Each line of information is repeated (either consecutively or interleaved) on the next line of the screen so that a 1250 line display can be provided for large screens resulting in a high quality picture even though the present 625 lines transmission system remains. Additional memories for the lines of information may be required. If a frame store is added, 100Hz repetition rate is another option, for 625 line display.

In another example, lines originally with a display period of 52 $\mu$secs are processed for display over a time interval of 64 $\mu$ secs (i.e. the whole line period in the existing UK television system); this produces an increased effective bandwidth of 23%. This example is particularly relevant to the forms of the invention, described above, in which there is no flyback motion.

In any of the above forms of the invention, where applicable, one line in a number of lines (e.g. alternate lines) may be removed prior to display on the screen. This feature may be used for small screens where this would not involve a significant loss of picture quality.

Any form of the present invention may be used in any existing TV system, and in currently proposed new TV systems. It is particularly advantageous when used in a television transmission system incorporating video information in time-multiplexed form, an example of such a system being the Multiple Analogue Component (MAC) transmission system currently proposed by the Independent Broadcasting Authority.

Preferably the storage means and the processing means are housed within the TV receiver.

Use of a sinusoidal wave generator without storage of the video information may require that alternate lines are not displayed; this would not create any substantial deterioration of the picture quality for small size screens.

In order that the invention may more readily be understood, a description is now given, by way of example only, reference being made to the accompanying drawing, in which:-

Figure 1 is a schematic diagram showing a television receiver according to the present invention;   and,

Figure 2 is a comparison of the scanning waveform used in the receiver of Figure 1 and that of a conventional receiver.

The television receiver 1 can be selectively fed video signals originating from any one of an aerial 2 which can receive satellite or other broadcasts, a TV cable operator station 3 or in-house video storage 4 (i.e. a video tape recorder or video disc player).

The broadcast video signals received at aerial 2 are in the Multiplexed Analogue Component (MAC) format proposed by the Independent Broadcasting Authority, namely that each line of information (of time duration 64 $\mu$ secs) has a first section with all the relevant colour information and a second, separate section with all the relevant luminance information.   Each line of information is fed into a digital store 5 within the receiver 1, so that in due course it can be clocked out and passed to processor 6 which prepares it for display on the screen 7 of receiver 1.

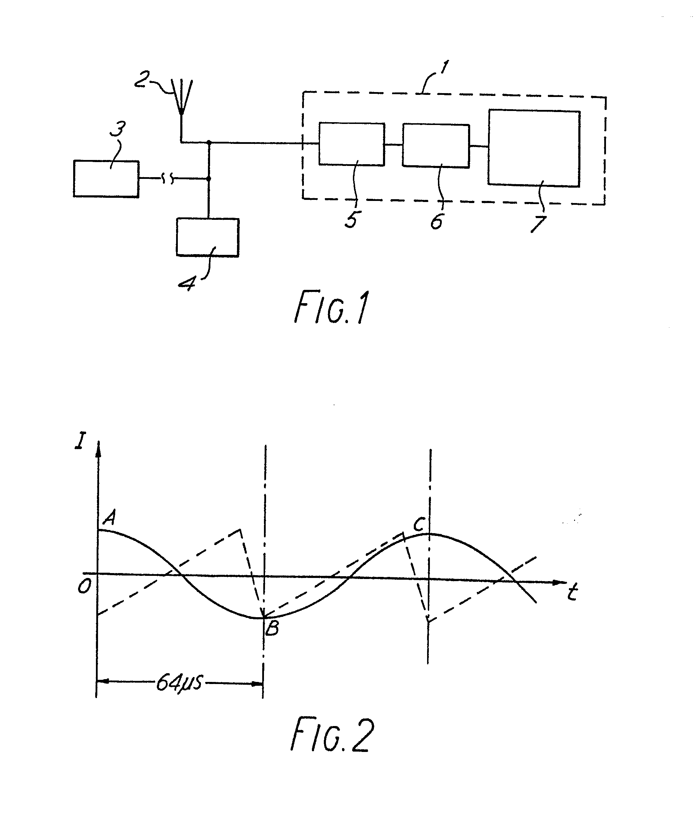

Processor 6 determines when it is appropriate for a line to be clocked out, controls the clocking out operation, arranges the line in a format suitable for display and/or checks that it is in such a form, and then displays it on the screen 7 over a time period of 64 $\mu$ secs utilizing a substantially sinusoidal scan current waveform as shown by the section AB in Figure 2. The next line of information is then extracted from store 5, but this time processor 6 arranges it for display in the reverse sequence to that of the previous line, the scan current waveform again being substantially sinusoidal and in fact continuing on from the waveform of the previous line, as shown by section BC.   Thereafter, the following pairs of lines repeat this arrangement.   The broken line in Figure 2 shows the conventional sawtooth scan current which incorporates a flyback section (usually of 12 $\mu$ secs duration) which produces substantial energy expenditure caused by reverse current hysteresis losses in the ferrite cores.   In the present invention, the absence of any flyback means that there is an additional 12 $\mu$ secs for displaying the information.

Preferably, the video signals from cable station 3 and storage 4 are also in the MAC format; if they are not, then processor 6 arranges them into a form suitable for display on screen 7.

Processor 6 can also be used to process the signals from any of the sources so as to produce a non-standard aspect ratio.   For example, although video signals at the sources are in a format to provide an overall picture of aspect ratio 4:3, after processing in processor 6 the final picture displayed on screen 7 has an aspect ratio of 5:3.

Thus the aspect ratio of the television picture may be selectively alterable from that which would normally be displayed.   The receiver may have means to store horizontal lines of video information and means to process the lines of video information so that the aspect ratio of the television picture can be selectively altered.   Processing of the video signals to produce a change in the aspect ratio can include (i) modifying a single type of transmitted video signals to a format whereby they produce a picture of a different aspect ratio to that which they would have produced in their original (i.e. transmitted) format or (ii) selectively passing transmitted video signals of a format corresponding to one aspect ratio while filtering out transmitted video signals of a format corresponding to another aspect ratio.

Thus, a cinematic film of aspect ratio 5:3 can be broadcast in its original dimensions and individual receivers can adapt, as required, the image for displaying with an aspect ratio of 4:3.

Also, in one example, the video signals which arrive at the TV set are in a format whereby they would produce a TV picture with an aspect ratio of 4:3 (this being the normal value for the present TV system in the U.K.). The processing means is able to change, when required, the form of the signals such that the TV picture has an aspect ratio of 5:3, i.e. a relatively broader picture. This feature could be used when showing cinematic films of 5:3 aspect ratio, or when showing ordinary films and the advantages of a 5:3 aspect ratio are required.

The transmitted signals, for example from the local storage 4, can be processed by processor 6 such that they are displayed at higher resolution or at double the field frequency compared to the signals from elsewhere, to thereby provide an improved display.

In another embodiment of the present invention (not illustrated), a small-screen television receiver, suited for use with the PAL transmission system, has a sinusoidal-wave generator to provide the horizontal scanning signal. Thus the sinusoidal-wave generator replaces the sawtooth-wave generator and S-correction circuits of a conventional television receiver.

While the present invention has been described with reference to television receivers incorporating cathode ray tubes on which an image is displayed, clearly the present invention extends to televisual apparatus having other types of display devices, e.g. liquid crystal displays or laser scans.

Technical details on ways of achieving the above-described features of the present invention would be evident to a person skilled in the art.

0108541

## CLAIMS

1.    A television receiver characterised by means (6) to provide a substantially sinusoidal scan current for the display of the horizontal lines of video information.

2.    A receiver according to Claim 1, characterised by means (5) to store the horizontal lines of video information and processing means (6) to arrange each line of video information in a format suitable for sinusoidal scanning.

3.    A receiver according to Claim 1 or Claim 2, characterised by means (5) to store the horizontal lines of video information and processing means (6) to phase modulate each line of information to achieve suitable linear horizontal scanning during display.

4.    A receiver according to any one of the preceding claims, characterised by means (5) to store the horizontal lines of video information and means (6) to control the display of the lines of video information, whereby in use the information display of one line is scanned in forward direction corresponding to the sequence transmitted to the receiver, and the information display of the immediately succeeding line is scanned in the reverse direction.

FIG.1

FIG.2